# EUROPEAN PATENT SPECIFICATION

(11) **EP 0 535 340 B1**
(45) Date of publication and mention of the grant of the patent: **04.11.1998**
(21) Application number: 92113831.9
(22) Date of filing: 13.08.1992
(51) Int. Cl.: G05B 15/02

(54) **Controller including multi-function**
Mehrfunktionsregler
Régulateur multifonction

(30) Priority: 30.09.1991 JP 251576/91; 07.10.1991 JP 259405/91; 18.10.1991 JP 271249/91
(43) Date of publication of application: 07.04.1993
(73) Proprietor: Yokogawa Electric Corporation, Tokyo 180 (JP)
(72) Inventor: Sakai, Yoshikatsu, Tokyo, 158 (JP); Yamaguchi, Kenji, Akishima-shi, Tokyo, 196 (JP); Nakagawa, Masayuki, Musashino-shi, Tokyo, 180 (JP); Yokomori, Masao, Tokyo, 167 (JP); Tsuda, Katsuhisa, Yokohama-shi, 223 (JP); Kamata, Yoshiyuki, Ohme-shi, Tokyo, 198 (JP)
(74) Representative: Henkel, Feiler, Hänzel

(56) References cited:
- EP-A- 0 115 178
- WO-A-87/01214
- DE-A- 2 614 924
- GB-A- 2 159 987
- GB-A- 2 181 274
- US-A- 4 141 065
- US-A- 4 303 973
- US-A- 4 403 297
- US-A- 4 528 623
- US-A- 4 533 990
- US-A- 4 797 670
- ADVANCES IN INSTRUMENTATION AND CONTROL vol. 45, no. 3 , 1990 , RESEARCH TRIANGLE PARK US pages 1383 - 1418 E.WILSON 'DESIGN OF CONSISTENT OPERATOR INTERFACE'

## Description

### BACKGROUND OF THE INVENTION

### 1. Field of the Invention

The present invention generally relates to a controller used in process control. More specifically, the present invention is directed to a controller with a high-grade function and also a better man-to-machine interface function, employing a full-dot type display unit as a front operation panel on which various sorts of control operation information can be selectively displayed, and also capable of selecting the control operations as well as the panels in response to signals from operation keys, and further of setting various parameters.

### 2. Description of the Prior Art

Conventionally, a single loop controller equipped with a microprocessor has been widely used in the field. Such a single loop controller own advantages of a light engineering load also a better operability, as compared with a distribution type control system (DCS).

One of the single loop controllers is described in, for instance, Japanese patent publication No. 57-57721 (1982). In this known single loop controller, the pointer for displaying information (process volume PV, set value SV, and control output MV) required to controls, the operation keys for changing the set value, the operation keys for changing control modes (automatic control mode, and manual control mode) are arranged on the front operation panel, whereas the setting means for setting various parameters used to control calculations, for designating various functions and correction calculations are provided on the side surface of the single loop controller.

Although such a conventional controller has a merit capable of maintaining the operabilities as same as in the analog controller, there is a problem that the measuring instruments must be pulled out from the rack and the setting means provided on the sides of these measuring instruments must be operated so as to set the various sorts of parameters. Furthermore, since only a minimum number of indicators and operation keys required to perform the controls has been provided on the front panel, the information required for the control operations, for instance, the trend information of the process volume PV must be recorded by a recorder separately provided with this controller.

Other relevant prior art is to be found in documents GB-A-2 181 274 and US-A-4 303 973.

The present invention has been made in an attempt to solve the above-described problems, and therefore, has a major object to provide such a controller with a better operability, while the total number of operation keys provided on a front panel thereof is minimized, capable of displaying with a simple key operation, various information such as trend information about process volume PV, and information used to set various control parameters of the controller.

Another object of the present invention is to provide a controller capable of easily selecting and executing a function as a single loop controller in which a single control loop is executed by a single controller, a function a cascade controller, a function as a selector controller, and a function as a program controller by a common hardware.

### SUMMARY OF INVENTION

According to the present invention there is provided a controller as claimed in claim 1. Further favourable embodiments of the present invention are disclosed in the claims 2 to 13.

### BRIEF DESCRIPTION OF DRAWINGS

The above-described objects and other features of the present invention will now be explained in conjunction with the drawings, in which:
Fig. 1 is a perspective view of an example of an arrangement of an outer view for a controller according to the present invention;
Fig. 2 is a schematic block diagram of a circuit arrangement of the controller according to one preferred embodiment of the present invention;
Fig. 3 illustrates an operation panel and various functions allocated to respective operation keys;
Fig. 4 represents a trend graph panel and various functions allocated to the respective operation keys;
Fig. 5 illustrates a tuning panel and various functions allocated to the respective operation keys;
Fig. 6 is an illustration for explaining expansions of various panels effected in the controller shown in Fig. 2;
Fig. 7 is a schematic circuit block diagram of a controller according to another preferred embodiment of the present invention;
Fig. 8 represents an alarm panel and various functions allocated to respective operation keys;
Fig. 9 is an illustration for showing an engineering panel of a signal conditioner;
Fig. 10 is an illustration for explaining a condition of panel expansions effected in the controller shown in Fig. 7;
Fig. 11 is a schematic circuit block diagram of a controller according to a further preferred embodiment of the present invention;
Fig. 12 is a schematic block diagram of an arrangement of a first function module 3a in a controlling means;
Fig. 13 is a schematic block diagram of an arrangement of a second function module 3b in the controlling means;
Fig. 14 schematically represents an engineering panel (environment setting panel);
Fig. 15 schematically illustrates a screen expansion effected when the second function module (CASCADE) is selected in the preferred embodiment of Fig. 11;
Fig. 16 is a schematic block diagram of a third function module (selector function module);
Fig. 17 is a schematic block diagram of a fourth function module (programmable controller function module).

### DESCRIPTION OF THE PREFERRED EMBODIMENTS

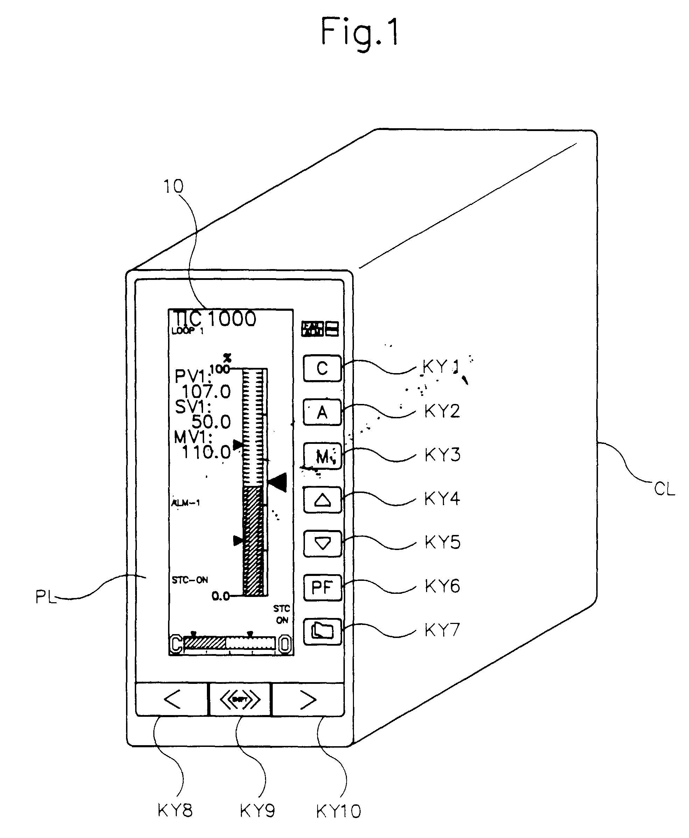

Fig. 1 is a perspective view of an outer view of a controller according to an example of the present invention. In this drawing, symbol "CL" indicates a main body of the controller, symbol "PL" shows a front panel of this controller. In this front panel, there are provided, for instance, a full-dot type liquid crystal display device 10 with a back lighting function, a plurality of operation keys KY1 to KY7 positioned beside this display device 10, and also a plurality of operation keys KY8 to KY10 aligned along a lower portion of the display device 10.

The display device 10 is so arranged as a compact CRT that characters and figures can be displayed in a mixture state. The respective operation keys are arranged by, for instance, depression button switches.

On a side surface of the controller, there is provided neither operation keys used for setting parameters, nor a display unit or various setting switches. To the contrary, these devices, switches, and keys have been employed at the side surface of the conventional controller.

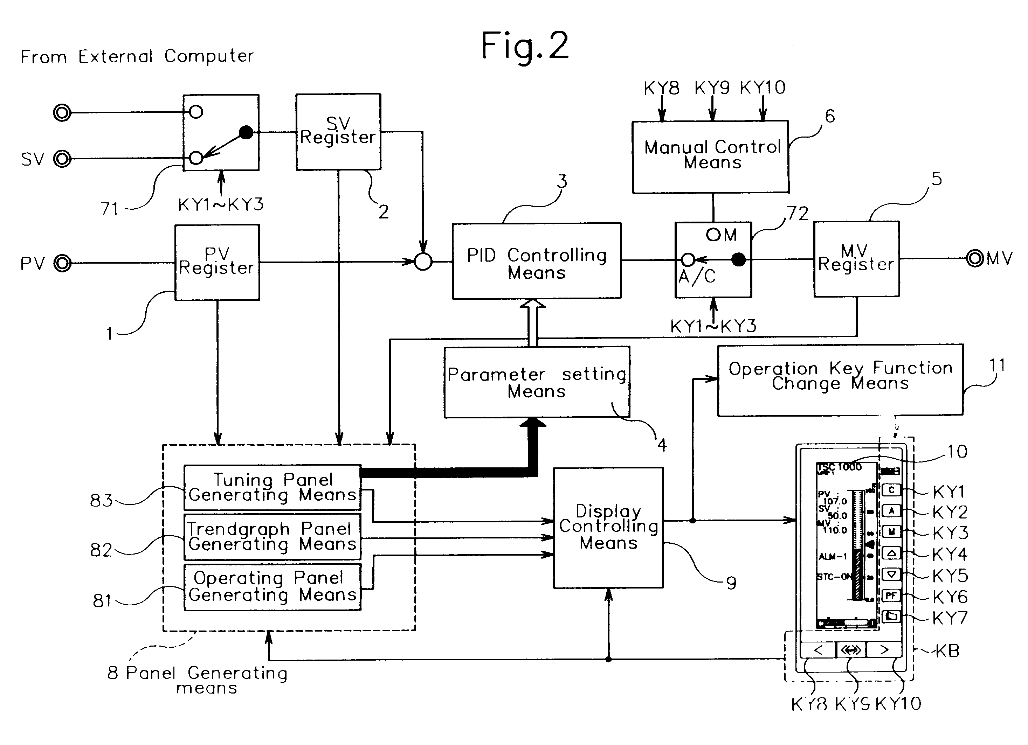

Fig. 2 is a schematic block diagram of a circuit arrangement of a controller according to one preferred embodiment of the present invention. In this drawing, reference numeral 1 denotes a measurement value register (PV register) for storing a process value (measurement value) PV; reference numeral 2 shows a set value register (SV register) for storing a set value SV; reference numeral 3 shows a control calculation unit (PID controlling means) for performing a control calculation such as PID on a deviation (difference) between the measurement value PV and the set value SV; reference numeral 4 shows a parameter setting means including a register into which various sorts of parameters such as PID employed in the control calculation unit 3, for setting the PID parameter and the like into the control calculation unit 3; and also reference numeral 5 is an output register for storing a control output (operation amount) MV calculated in the control calculation unit 3. It should be noted that any of these functions are realized by a software installed into a microprocessor.

Also, in Fig. 2, reference numeral 6 denotes a manual control means for manually controlling the control output MV, which is so contructed that a manual output can be controlled in response to instructions of the operation keys KY8 to KY10, and which becomes effective in the manual mode. Reference numerals 71 and 72 show changing switches of operation mode, which are so arranged that the operation mode is selected as an operation mode, an automatic operation mode, a manual operation mode by way of an external computer in response to the instructions from the operation mode changing keys KY1 to KY3 (will be described later). These arrangements are substantially similar to the arrangement of the conventional controller with employment of the microprocessor.

Furthermore, reference numeral 10 is the display device which has also been shown in Fig. 1 and provided on the front panel of the controller, and symbol "KB" is an operation keyboard positioned around this display device 10, on which a plurality of operation keys KY1 to KY10 are employed. Among these operation keys, such a function as a panel expansion key for instructing a panel expansion displayed on the display device 10 has been allocated to the operation key KY7.

In Fig. 2, reference numeral 8 shows a panel generating means for generating various panels displayed on the display unit 10, into which the measurement value PV, the set value SV, and the control output MV are inputted respectively, and the signals from the operation keyboard KB are inputted. In this panel generating means 8, reference numeral 81 denotes an operating panel generating means. The operating panel generating means 81 owns such a panel generating function that the values of the measurement value PV and the control output MV are displayed by bar graphs on the display device 10 under such a condition that the value of the set value SV is related to the value of the measurement value PV. Also in the panel generating means 8, reference numeral 82 indicates a trend-graph panel generating means for displaying a trend of the measurement value PV on the display device 10 as the trend graph, and reference numeral 83 denotes a tuning panel generating means for adjusting/setting various control calculation panels to be set to the control calculation means 3.

Reference numeral 9 in Figure 2 is a display controlling means for controlling a panel display (panel expansion) to the display device 10. This display controlling means 9 controls the panel expansion in such a manner that upon receipt of the signal issued from the panel expansion key KY7, both of the operating panel formed by the operating panel generating means 81 and the trend graph panel formed by the trend-graph panel generating means 82 are displayed on the display device 10, and when the signal from the panel expansion key KY7 and a signal from, for instance, the specific operating key KY9 independent from this panel expansion key KY7 are received at the same time, the tuning panel produced by the tuning panel generating means 83 is displayed on the display device 10.

In Fig. 2, reference numeral 11 shows an operation key function change means for changing the functions of the the plural operation keys, for instance, the keys KY1 to KY10 by receiving the panel expansion on the display device 10 by the display controlling means 9. This operation key function change means 11 is so arranged that when, for instance, the operating panel is displayed on the display device 10, the respective operation keys KY1 to KY6 function as such operation keys for changing either the control mode, or the set value, and also when the tuning panel is displayed, these operation keys KY1 to KY6 function as such operation keys for selecting the sort of parameter, or setting the parameter value.

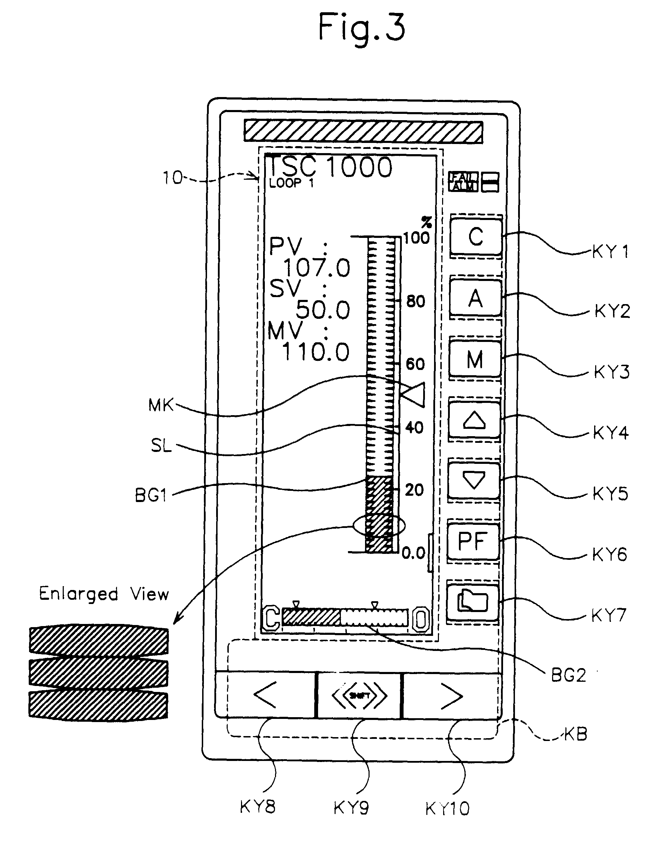

Fig. 3 represents various functions allocated to the respective operation keys when the operating panel generated by the operating panel generating means 81 and this operating panel is displayed.

The operating panel displayed on the display device 10 is such that the measurement value PV is displayed as a bar graph BG1 at a near center of this panel, which is expanded/compressed along a vertical direction of this panel in response to this measurement value, and the control output PV is expressed as a bar graph BG2 at a lower side of this panel, which is expanded/compressed along a horizontal direction of this panel, depending upon the value of this control value. It should be noted that as shown in an expanded drawing of this embodiment, the shapes of these bar graphs are so formed that concave-convex portions are aligned at a preselected pitch along the expansion/compression direction. As a result, easy recognition is available for such a condition that a length of a tip portion of the bar graph is slightly changed.

With respect to the bar graph BG2 indicative of the control output MV, a symbol "C" indicated at a left side of this panel implies that the control output MV becomes small and, for instance, the valve is closed. Also, symbol "O" indicated at a right side implies such a direction along which the valve is opened. Also, the set value SV is indicated by a triangle-shaped indication mark MK in relation to the same scale of the bar graph BG1 representative of the measurement value PV. The position of this indicative mark is moved in the vertical direction along the scale SL in conjunction with changes of the set value (operations of the operation keys KY4 and KY5). Such a display condition is simulated as the front panel plane (measuring device plane) of the conventional controller, and there fore gives no incongruity sense to any operators who are used to the conventional controller when the control operating conditions are monitored and operated.

The PV value, SV value, MV value are also displayed as digital values within the operating panel. At the upper portion of the panel, there is displayed a tag number (TIC-100) attached to the control loop allocated to the controller. In accordance with such an operating panel, when an operator monitors the operating panel at a remote place from the controller, the PV value, SV value, MV value corresponding to the major data can be recognized as the analog representation, and when the operator approaches this controller, these concrete numeral values of the data can be recognized as the digital representation.

In the keyboard KB, the functions for changing the operation modes have been allocated to the operation keys KY1 to KY3, and the switch means 71 and 72 shown in Fig. 2 are driven in response to the signals issued from these operation keys. That is to say, when the operation key KY1 is depressed, the set value SV is given from the external computer to set such an external computer operation mode that the control operation is carried out. When the operation key KY2 is depressed, the automatic operation mode is set, so that the control operation is performed by solely this controller. When the operation key KY3 is depressed, the numeral control mode is set, so that the control output MV can be manually controlled.

To the operation keys KY4 and KY5, the functions for setting the set value SV are allocated. The value of the set value register 2 can be varied by depressing these operation keys. This value of the set value register 2 can be recognized as the position of the set value mark MK of the display device 10.

To the operation keys KY8 to KY10, the functions for changing the control output MV when the manual control mode is selected have been allocated. In other words, under such a condition that the manual control mode is selected, the signals derived from these operation keys are given to the manual controlling means 6. In this preferred embodiment, the control output MV is decreased when the operation key KY8 is depressed, whereas the control output MV is increased when the operation key KY10 is depressed. Also, when both of the operation key KY8 or key KY10, and the operation key KY9 (speed increasing key) are simultaneously depressed, either the increasing speed or the decreasing speed of the control output MV is emphasized so that a desirable control output value can be quickly achieved.

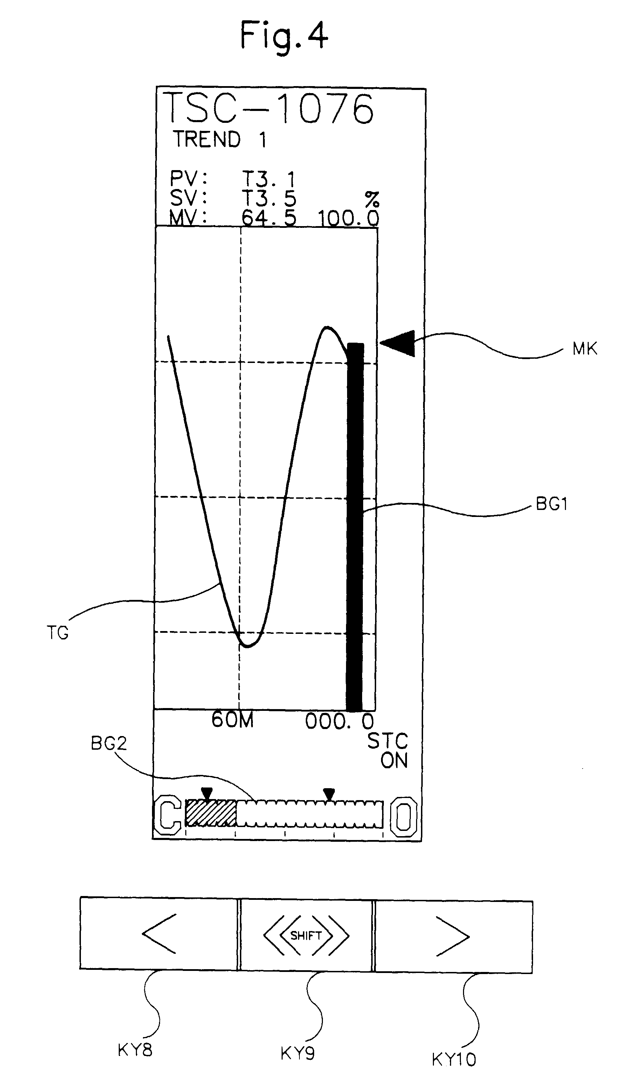

Fig. 4 shows a panel formed by the trend graph panel generating means 82 and the respective functions allocated to the respective operation keys are displayed when this panel is displayed.

In this trend graph panel, the measurement value PV of the control loop loaded by the controller is displayed in such a manner that the past data measured from 48 hours before the present measurement time at maximum up to the present measurement time are displayed as a trend graph TG. Both of the present data and the set value SV are displayed at the latest time position of the trend graph as the bar graph BG1 and the set value indicating mark MK. Such a trend graph is useful when process behavior at a start-up time is grasped, a stable operation is monitored, and a non-man power operation condition effected during night and weed end is confirmed in the next morning. For example, sudden changes occurring in the data within a short time period can be also recognized by recording both of the maximum value and minimum value of the process value PV occurring within a predetermined recording period as bar shapes.

Under the lower side of the panel, the control output MV is represented as a bar graph BG2 in such a manner that this bar graph is expanded/ compressed along the horizontal direction of this bar graph, depending upon the values of the control output MV. This bar graph representation is similar to that of the operation panel. At the upper portion of the panel, the PV value, SV value and MV value at the present time instance are displayed as the digital value.

To the operation keys KY1 to Ky10 (Ky1 to KY7 are omitted in this drawing) among the respective operation keys of the keyboard KB, functions similar to those when the operation panel is displayed have been allocated. It should be noted that the functions for instructing expansion/compression of the time axis of the trend graph, for instance, the functions for expanding/compressing the range (amplitude direction) may be allocated to the operation keys KY4 and KY5.

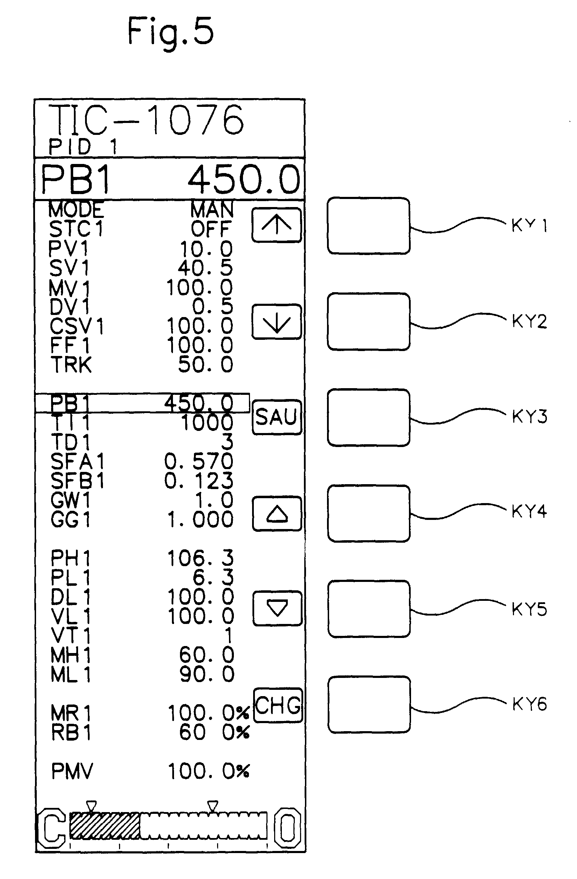

In Fig. 5, there are shown one example of a panel generated by the tuning panel generating means 83, and also various functions allocated to the respective operation keys when this panel is displayed. As the tuning element in the controller, there are, for instance, tuning of the PID calculation parameter, and self-tuning of the PID calculation parameter (STC). In this preferred embodiment, the tuning panel such as the PID calculation parameter is displayed. This tuning panel is selected from the tuning menu panel.

In the tuning panel of this PID calculation parameter, a large number of parameters related to the PID calculation parameter are displayed at the same time, and both of the set items and the parameter set values thereof are displayed on the enlarged window at the upper portion. As a result, the desired parameter can be set, while grasping a mutual relationship between a parameter to be set and other parameters.

Symbols indicative of the functions allocated to the respective operation keys are displayed at positions corresponding to the respective operation keys at the right side of the panel. That is, the functions as keys for moving the cursor position (inverting display part) are displayed for the operation keys KY1 and KY2, the function as a save key is displayed for the operation key KY3, the functions as keys for increasing/decreasing the parameter set value are displayed for the operation keys KY4 and KY5, and also the function as a change key is displayed for the operation key KY6.

It should be noted that the change key KY6 has such a function capable of monitoring the operation panel, or the trend graph panel (namely, panel which has been displayed before the panel is extended to the tuning panel) when this operation key KY6 is operated (depressed) and while this key is being operated (depressed). since such a change key is employed, the value of the parameter may be changed/controlled while displaying and monitoring either the operational panel or the trend graph panel on the screen of the display device 10, and also the tuning results on the same screen of the display device 10.

When extended into the tuning panel, the functions of the respective operation keys are changed into such corresponding functions as displayed on the screen by the operation key function changing means 11.

In this tuning panel, an item to be set is selected by moving the cursor (inverting indication) by using the operation keys KY1 and KY2 (cursor moving key). The item selected at this time is displayed on the enlarged window positioned at the upper portion in the enlarged display form for an easy observation. In this example, such a condition is represented that a proportional band PB has been selected.

Subsequently, the value of the parameter (450.0 in this case) is increased, or decreased so as to be varied into a desirable value by operating the operation key KY4 or KY5 (increasing, or decreasing key). Although such a set parameter value per se is useful, this parameter value is stored into a non-volatile memory (register) employed in the parameter setting means 4 by operating the operation key KY3 (save key).

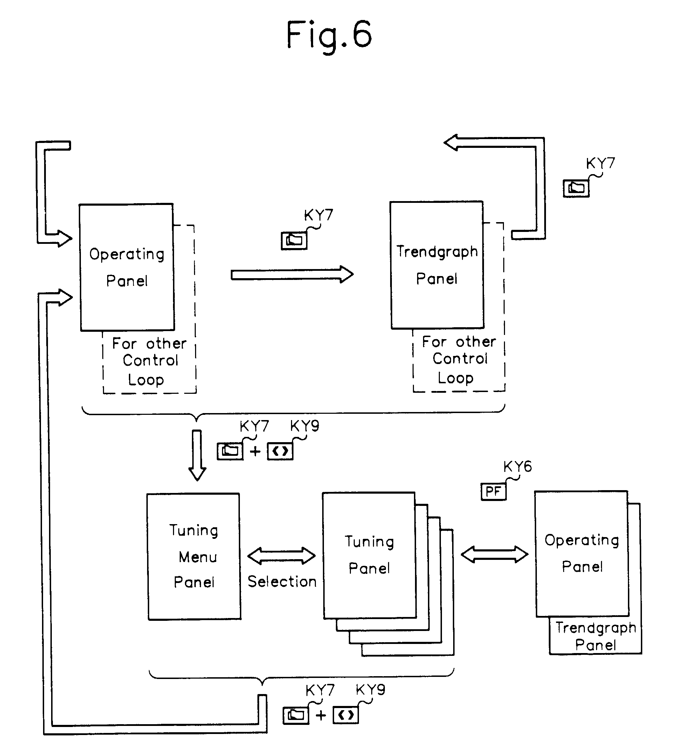

Fig. 6 is an illustration of an expansion of a panel. First of all, an operating panel as shown in Fig. 3 is displayed as a standard panel on the display device 10. Under such a condition that this operating panel (standard panel) is being displayed, when the panel expanding key KY7 is operated, a trend graph panel shown in Fig. 4 is displayed. If the panel expanding key KY7 is again operated under the condition that the trend graph panel is being displayed, the displayed trend graph panel is returned to the operating panel. In this example, the controller controls one control loop. In case that a plurality of control loops are controlled by this controller in a parallel form, it is so arranged that operating panels and trend graph panels can be displayed as illustrated by a dot line with respect also to other control loops.

When the panel expanding key KY7 and the speed increasing key KY9 are simultaneously depressed under such a condition that either the operating panel, or the trend graph panel is being displayed, as shown in Fig. 5, the tuning menue panel is represented in order to be expanded into the tuning panel. Here, if the tuning panel of the PID calculation parameter, for instance, is designated (selected), the panel as represented in Fig. 5 is displayed. It should be noted in the tuning menu panel as to the selection to a desirable tuning panel, that 6 items may be selected by allocating the respective selecting items to the respective operation keys KY1 to KY6 as soft keys.

When the change key KY6 is depressed under condition that the tuning panel is being displayed, either the operating panel, or the trend graph panel is displayed while this changing key KY6 is being depressed. A selection whether the operating panel, or the trend graph panel is displayed when the change key KY6 is depressed, is determined based upon such a fact that either panel is opened just before the operation is transferred into the tuning menue panel. That is to say, if the panel is expanded from the operating panel to the tuning panel, when the change key KY6 is depressed, the operating panel is displayed. Then, when the depression of this change key KY6 is released, the displayed panel is returned to the original tuning setting panel.

When both of the panel expanding key KY7 and the speed increasing key KY9 are depressed at the same time under such a condition that the tuning panel is being displayed, the displayed panel is returned to either the operating panel, or the trend graph panel, and then even after the depression of these keys is released, one selected panel remains displayed.

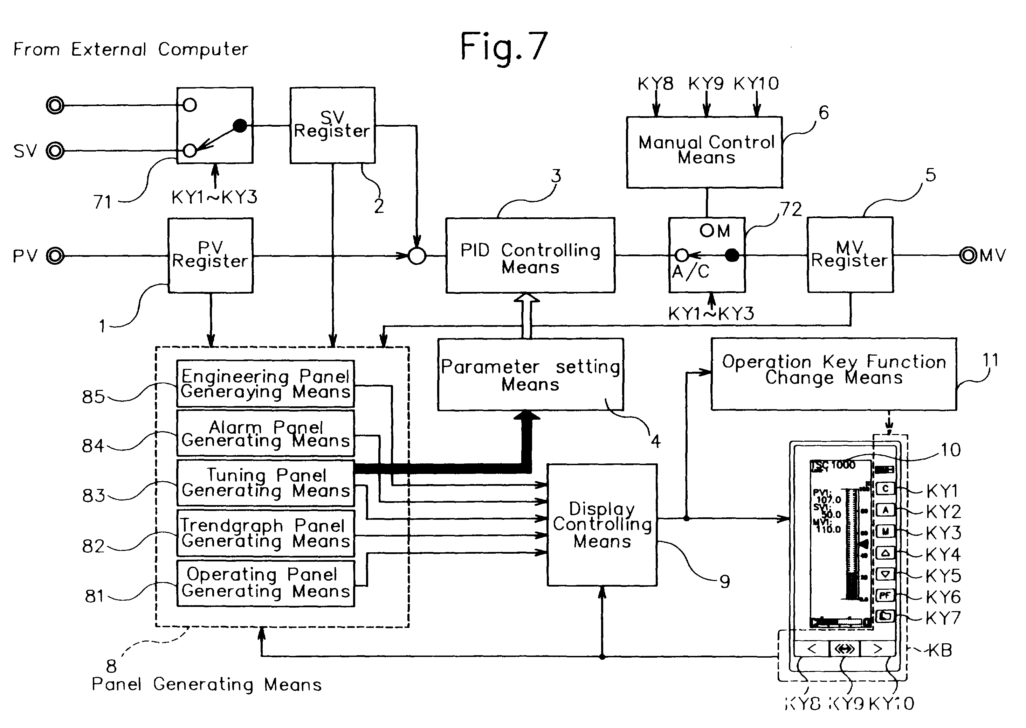

Fig. 7 is a schematic block diagram for showing an arrangement of a controller according to another preferred embodiment of the present invention. In accordance with this preferred embodiment, an alarm panel generating means 84 for displaying various sorts of alarm information at the same level as that of the operating panel, or the trend graph panel, is provided in the panel generating means 8, and also an engineering panel generating means 85 is provided in the panel generating means 8. This engineering panel generating means 85 is mainly used in such engineering as a selection of a function of the controller, setting of an input range, and setting of a communication functional a level lower than the level of the tuning panel.

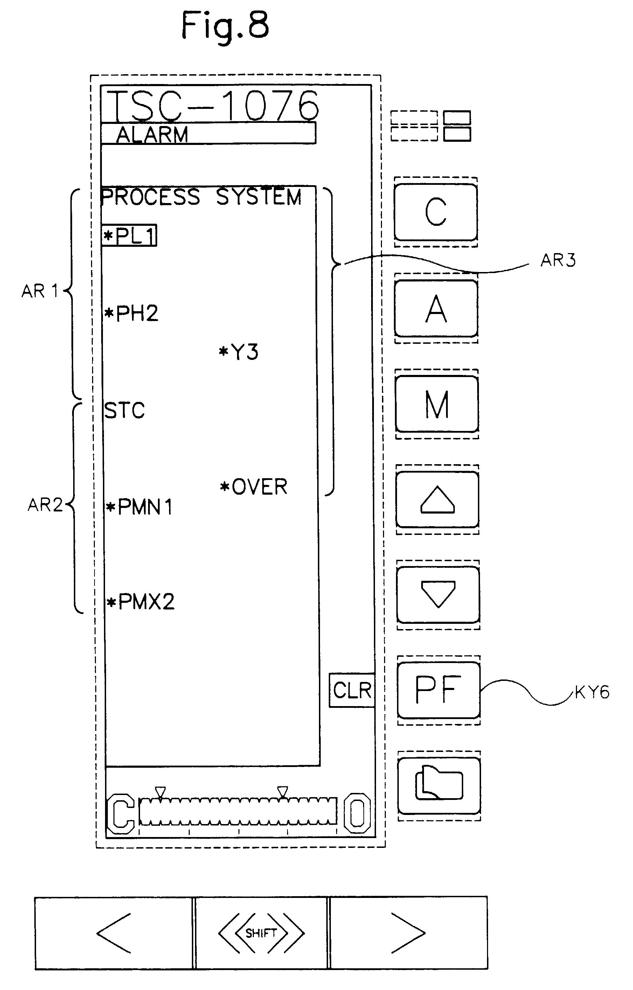

Fig. 8 represents one example of an alarm panel generated by the alarm panel generating means 84 and also various functions allocated to the respective operation keys when this alarm panel is displayed. This alarm panel is extendible from, for instance, the trend graph panel by operating the panel expanding key KY6.

This controller is equipped with such various functions that a monitor is performed whether or not, for example, the process value PV exceeds a certain upper limit value and a certain lower limit value, another monitor is performed whether or not the parameters are correctly tuned when the PID calculation parameter is self-tuned, and a system monitor is performed whether or not the operation of the controller per se is correctly executed.

The alarm panel corresponds to such a panel used to recognize/confirm these monitored results and is arranged by a process alarm display region AR1, a self-tuning error display region AR2, and a system alarm region AR3 and the like.

At a position corresponding to the operation key KY6 located near the right lower portion of the panel, a symbol (CLR) is represented which indicates a clear function allocated to this operation key.

Alarm items corresponding thereto are displayed on the respective alarm regions. It should be noted that an item "PL1" which has been displayed in the reverse form denotes an item presently occurred. The item which is displayed in the non-inverting form, represents an item occurred in the past. A mark * displayed on a head portion of each item shows a mark used for requesting confirmation by an operator. When the operation key KY6 allocated to the clear function is operated, t implies that an alarm happening to occur has been confirmed and then the mark * becomes disappeared.

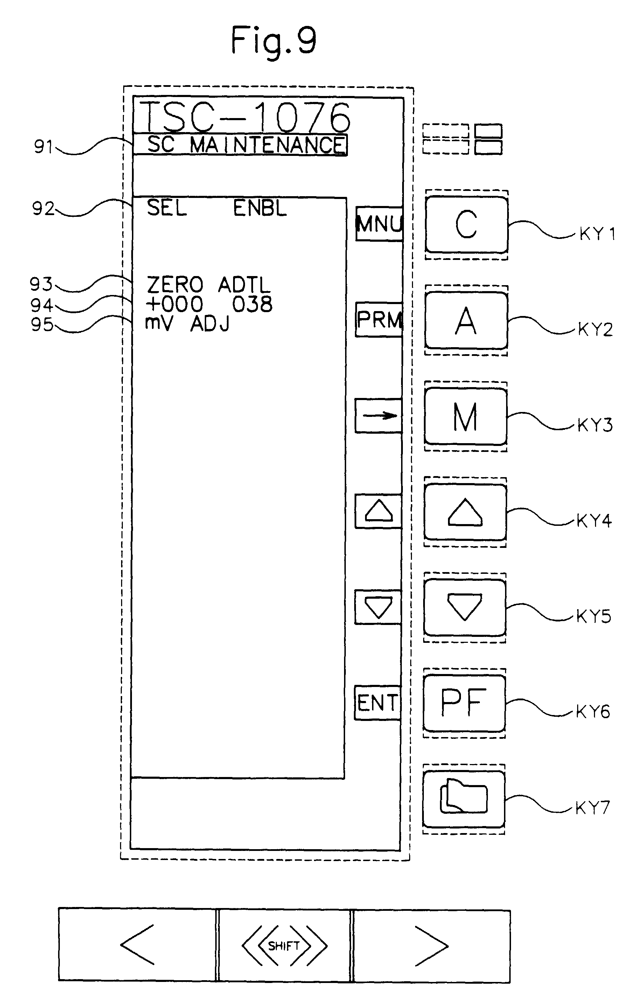

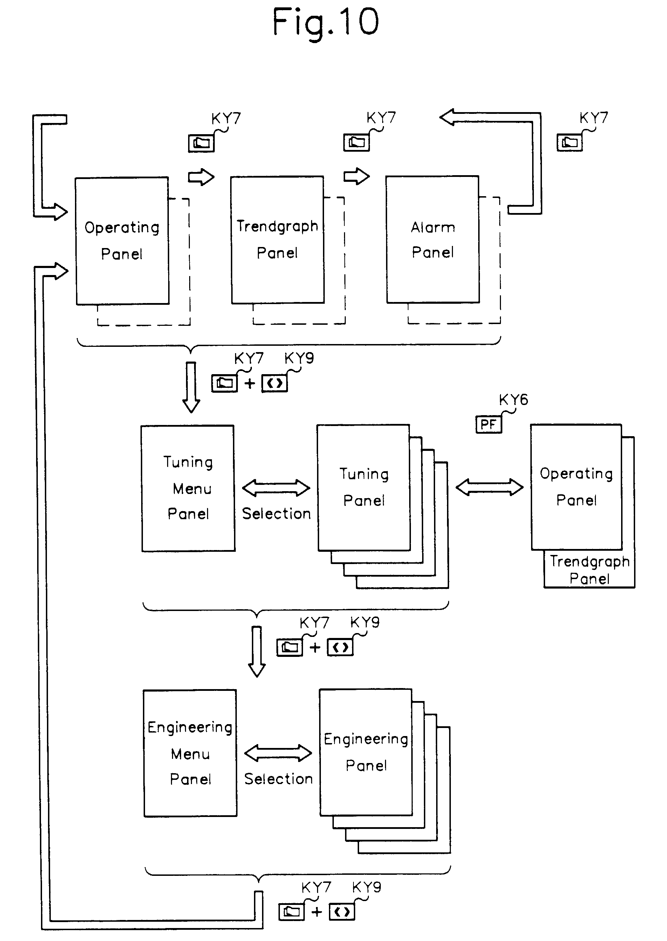

Fig. 9 represents one example of an engineering panel generated by the engineering panel generating means 85, and various functions allocated to the respective operation keys when this panel is displayed. It may be seen in figure 10 that, when, from the tuning panel, the panel expanding key KY7 and the speed increasing key KY9 are simultaneously operated, a menu panel used for selecting the engineering panel is displayed at a first, from which the engineering panel as represented in Fig. 9 is selected.

In Fig. 9, there is shown a signal conditioning panel used for setting types and ranges and the like of the sensor input coupled to the controller. Normally, these engineering panels are employed prior to the commencement of operation by the controller, and is set under such a condition that the control calculation is interrupted. As a result, no bar graph display indicative of the control output MV used to monitor the process is displayed on this signal conditioning panel. Also, in case of this panel, the set values are automatically saved into a memory employed in this controller at the same time when the setting operation is carried out. The function as the save key has not been allocated to any operation keys.

This engineering panel corresponds to an example of a panel used to perform engineering of a signal conditioner. Reference numeral 91 denotes a panel title, reference number 92 indicates a represent whether or not a setting operation is available, and reference number 93 shows a title of a setting item. In this case, a title of item for adjusting a zero point is displayed. Reference numeral 94 shows data, and reference numeral 95 denotes a unit. A function of a menu key (a major item selecting key) has been allocated to the operation key KY1, a function as a parameter key (a minor item selecting key) has been allocated to the operation key KY2, a function as a cursor key has been allocated to the operation key KY3, and a function as set value increasing/decreasing keys has been allocated to the operation keys KY4 and KY5. Furthermore, a function as set data writing key has been allocated to the operation key KY6.

In this engineering panel, while the set data within the signal conditioner employed in the signal input circuit of the controller is read so as to change this value, either the setting operation, or this operation command is performed. In the signal conditioner unit, the respective items are classified into two stages such as the major item and the minor item, and may be successively read out by manipulating the menu key KY1 and the parameter key KY2 in such a manner that pages of a book are successively turned over. By operating the cursor key KY3, the read data are selected for each digit thereof, and the value of the read data is changed by operating the increasing/decreasing keys KY4 and KY5. When desired data is displayed, this data is written into the memory employed in the signal conditioner by finally operating the write key KY6.

The data setting operation at the engineering panel must be performed under such a condition that the control calculation by the controller is stopped and the operation mode is brought into the non-operation mode. As a result, when the engineering panel is first displayed, or expanded, such a condition is made that a representation "SET INHIBIT" indicating that the setting operation is impossible is made on the display unit 92 used for indicating whether or not the setting operation is available.

Under this condition, when the cursor key KY3 is operated, the setting condition is brought into "SET ENABLE", the control calculation is stopped, and the set data within the signal conditioner can be read out.

It should be noted that a panel for setting a password is prepared in these engineering panels in order that no one freely changes the parameters within the engineering panels. When a specific password (for example, password arranged by a four-digit number) is set, the password must be inputted when the parameters are varied while the respective engineering panels are opened.

Fig. 10 schematically illustrates an expansion state of a panel performed in the controller according to the preferred embodiment of the present invention, shown in Fig. 7. A different point of this panel expansion from that shown in Fig. 6 is such that the alarm panel as indicated by Fig. 8 is displayed from the operating panel and the trend graph panel by operating the panel expanding key KY7. When both the operation key KY7 and the operation key KY9 are operated at the same time under such a condition that the tuning setting panel is being displayed, this tuning set panel is expanded into the engineering panel as shown in Fig. 9.

In accordance with the controller with such an arrangement, the controller with a better operability can be provided so that the operation for the control operation and the setting operation for setting the various parameters can be performed with employment of a limited number of operation keys. The various sorts of parameters can be set by employing the change key on the tuning setting panel, while confirming the operation conditions of the control by the same display device.

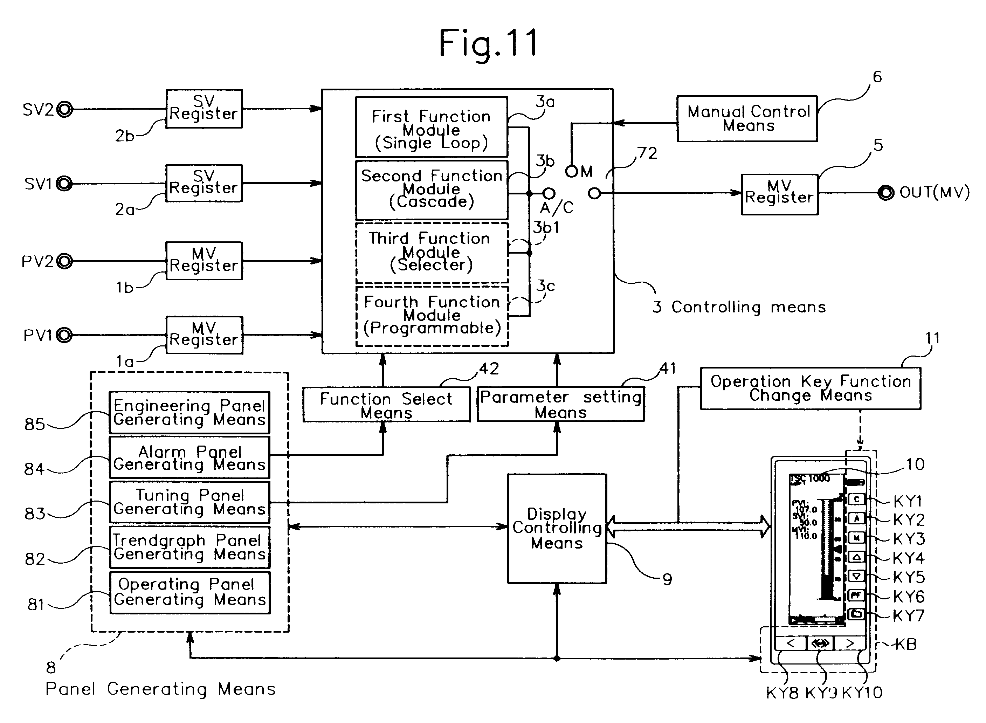

Fig. 11 is a schematic block diagram of a controller according to a further preferred embodiment of the present invention. In Fig. 11, reference numeral 1a denotes a first measurement value register for storing a first process value (measurement value) PV1; reference numeral 1b shows a second measurement value register for storing a second process value (measurement value) PV2; reference numeral 2a is a first set value register for storing a first set value SV1; reference numeral 2b denotes a second set value register for storing a second set value SV2; and reference numeral 3 represents a controlling means for performing a predetermined calculation on there signals and for executing a control calculation such as PID on a deviation between the measurement value and the set value by inputting there into the measurement values PV1, PV2 stored in the first and second measurement value registers 1a and 1b, and also the set values stored in the first and second set value registers.

In this controlling means 3, reference numeral 3a indicates a first function module functioning as a single loop controller for executing a single loop control with respect to a single control element, and a second function module functioning as a cascade controller for performing a cascade control by serial-connecting two control elements.

Reference numeral 41 is a parameter setting means including a register for storing therein the various parameters such as PID used in the controlling means 3, for setting the PID parameter into the controlling means 3. Reference numeral 42 shows a function selecting means for selecting first and second function modules. Reference numeral 5 is an output register for storing a control output (operation amount) MV calculated in the controlling means 3. These functions are realized by way of the software installed in the microprocessor. Reference numeral 6 is a manual control means for manually controlling the control output MV, and is so constructed that this means 6 is available in the manual mode, and then a manual output can be controlled in response to instructions from the operation keys KY8 to KY10.

A display controlling means 9 for controlling a panel display (panel expansion) to the display device 10 automatically rearranges various sorts of panels generated by the panel generating means 8, and displays the rearranged panel on the display device 10 in response to the signal from the display expanding key KY7.

That is to say, when the first function module is selected by the function selecting means 42, a panel rearrangement is performed which requires as a single loop controller, the signal from the panel expanding key KY7 is received, and with respect to the first process value PV1, the operating panel generated by the operating panel generating means, the trend graph panel generated by the trend graph panel generating means 82, the tuning panel generated by the tuning panel generating means 83, the alarm panel generated by the alarm panel generating means 84, and the engineering panel generated by the engineering panel generating means 84 and the like are displayed on the display device 10.

When the second function module is selected, the present panel is rearranged by the panel required as the cascade controller, and with respect to the first process value PV1 and the second process value PV2, upon receipt of the signal derived from the panel expanding key KY7, the operating panel generated by the operating panel generating means 81, the trend graph panel generated by the trend graph panel generating means 82, the tuning panel generated by the tuning panel generating means 83, the alarm graph generated by the alarm panel generating means 84, and the engineering panel generated by the engineering panel generating means 85 and the like are displayed on the display device 10.

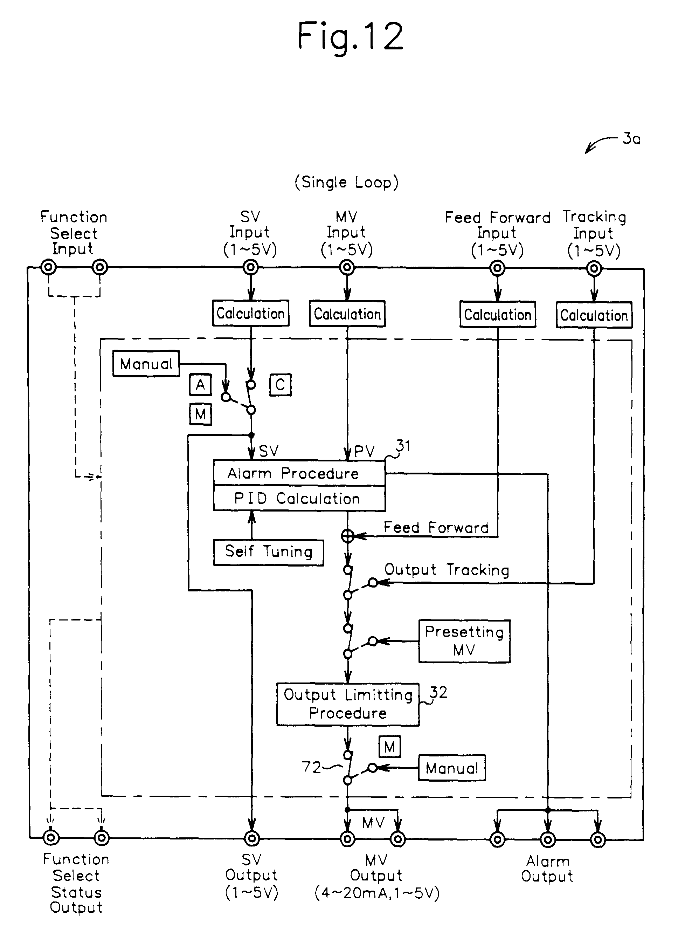

Fig. 12 is a schematic block diagram of an arrangement of the first function module 3a employed in the controlling means 3. In this drawing, reference numeral 31 denotes a control element for performing an alarm process and a control calculation process to each of the inputted first process value PV1 and the inputted second process value PV2. Reference numeral 32 shows a limiting procedure element to the calculation result obtained at the control element 31. This first function module 3a is so arranged that this module functions as the single loop controller for performing, for instance, the PID control calculation on a difference between the first process value PV1 and the first set value SV.

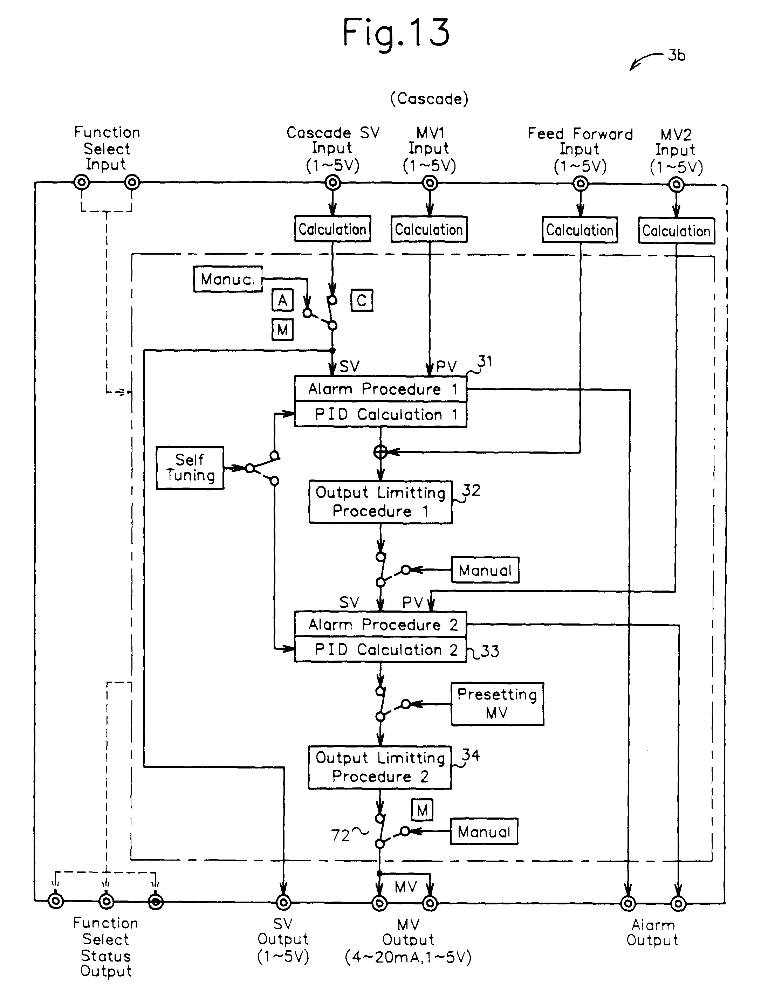

Fig. 13 is a schematic block diagram of an arrangement of the second function module 3b employed in the controlling means 3. In this function module 3b, reference numeral 32 is a limiting procedure element for performing an output limiting procedure, and reference numeral 33 shows a control element into which both of the second process value PV2 and the signal from the control element 31 are supplied as the set values via the limiting procedure element 32. The two control elements are series-connected to each other to function as the cascade controller. Reference numeral 34 indicates a limiting procedure element for performing the output limiting procedure on the calculation result at the control element 33.

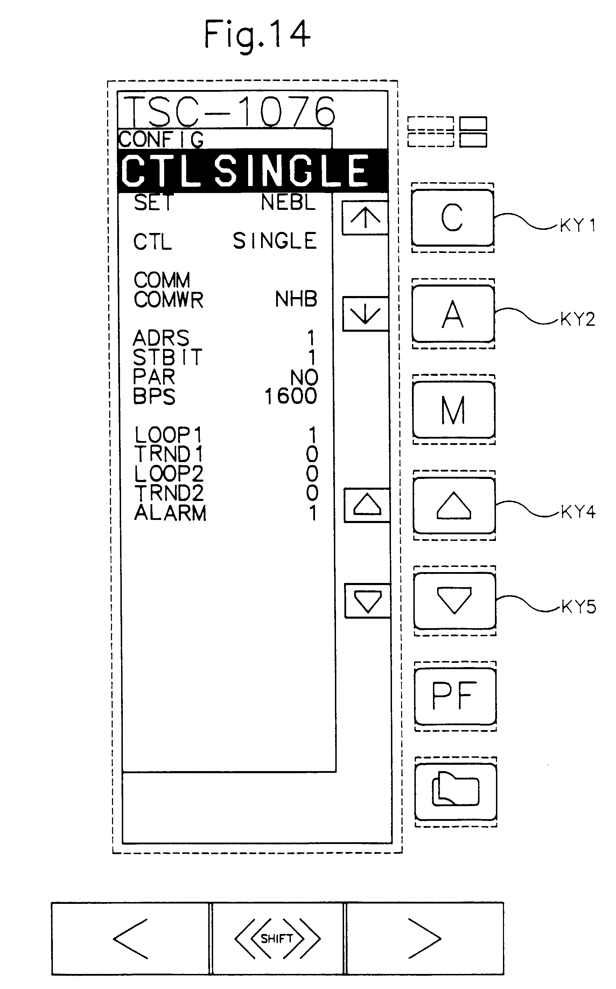

Fig. 14 represents an engineering panel (environment setting panel) used to set the functions of the controlling means 3 on the engineering panel generated by the engineering panel generating means 85.

In this panel, the item of CTL (an item for selecting the function of the controller) is designated by the operation keys KY1 and KY2 (these keys function as item selecting keys in this panel), and a selection is made between the first function module (SINGLE) or the second function module (CASCADE) by operating the operation keys KY4 and KY5 (functioning as INC/DIC keys for data), so that the function selection can be done.

Other environment than the function setting operations of the controller, for instance, communication format, start mode, ad way of displaying a panel may be set by utilizing this panel.

It should be noted in this engineering panel that the setting operation can be achieved without any errors, while the items (parameters) designated by the operation keys KY1 and KY2 are displayed in the inverting form and also this items is displayed on the enlarged window under the title of the panel in the inverting form.

When the first function module (SINGLE) is selected, a plurality of panels which have been produced by the panel generating means 7 are rearranged by the display controlling means 8, and a sequence to expand these rearranged panels on the display device 10 is shown in Fig. 10.

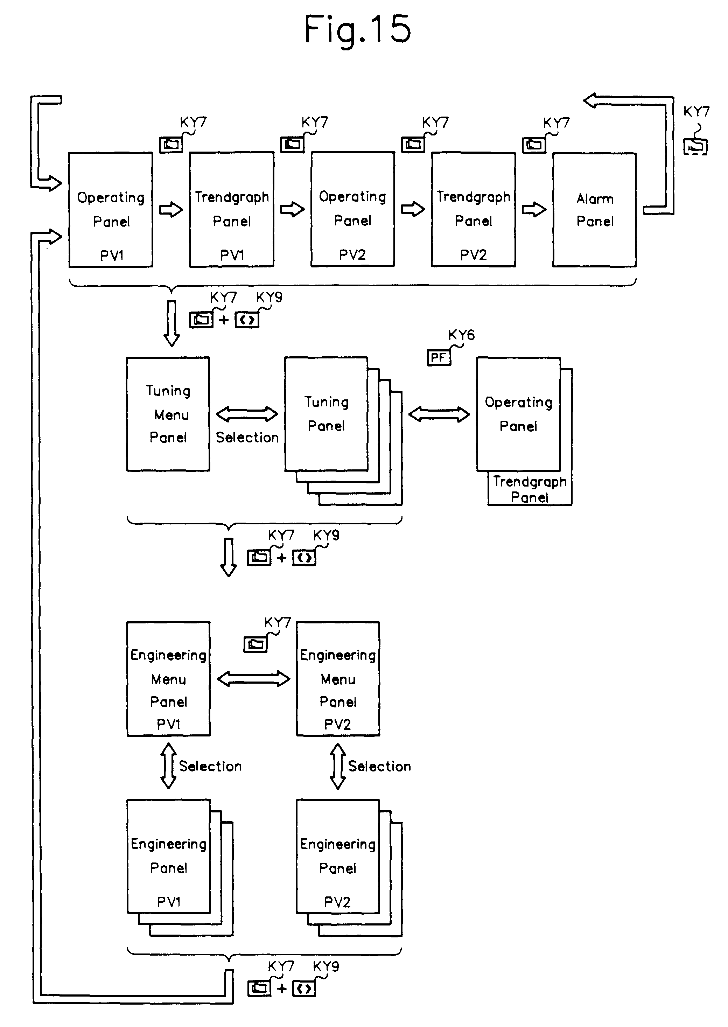

In Fig. 15, there is shown one example such that when the second function module "CASCADE" is selected, a sequence to rearrange a plurality of panels formed in the panel generating means 8 and to perform a panel expansion on the display device 10 by the display controlling means 9.

That is to say, the operating panel as indicated in Fig. 3 is the standard panel, every time the panel expanding key KY7 is depressed, the panel expansion order is as follows from the operating panel (for displaying PV1), the trend graph panel (panel for handling the first process value PV1), the operating panel (for displaying PV2), the trend graph panel (panel for handling the second process value PV2), to the alarm panel. When the panel expanding key KY7 and the speed increasing key KY9 are depressed at the same time under such a condition that these operating panels are displayed, a tuning menu panel (capable of selecting the process values PV1 and PV2) to be expanded into the tuning panel as shown in Fig. 5 is represented. Here when, for instance, a designation is made of the tuning panel of the PID calculation parameter, the present panel is expanded to the panel as represented in Fig. 5. IF the change key KY6 is depressed under the condition that the tuning panel is displayed, the operating panel is displayed while depressing this key.

Under such a condition that the tuning panel is displayed, when the panel expanding key KY7 and the speed increasing a key KY9 are simultaneously depressed, an engineering menu panel (capable of selecting the process values PV1 and PV2) to be expanded into the engineering panel as indicated in Fig. 14 is displayed. IF the environment setting panel used to set the function is designated under this state, the present panel is expanded into the panel as shown in Fig. 14. When both of the panel expanding key KY7 and the speed increasing key KY9 are simultaneously depressed under such a condition that the engineering panel is displayed, the present panel is returned to the original operating panel.

As described above, if either the first function module (single loop), or the second function module (cascade) is selected in the function selecting means 42, the sort of panels displayed on the display device 10 are automatically rearranged into the panels corresponding to the respective function modules and then displayed by the display controlling means 8.

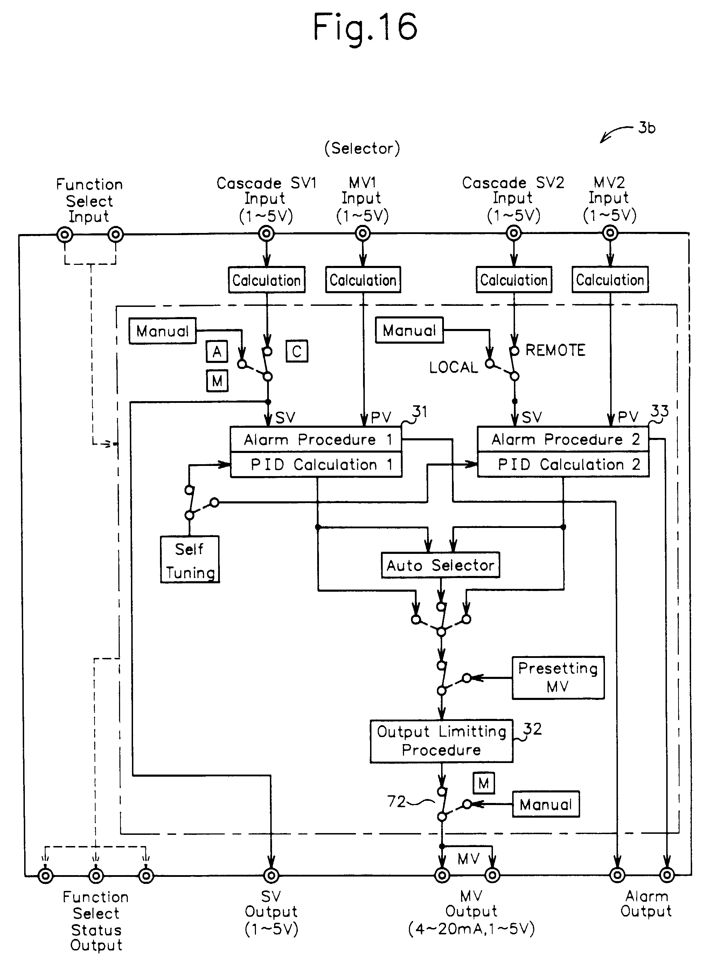

Fig. 16 is a schematic block diagram of an arrangement of a selector function module when the third function module (selector function module) as shown in a dot-line block 3b1 in the controlling means 3 is employed in Fig. 11.

This selector function module is so constructed that two control elements 31 and 32 are connected in parallel with each other so as to function as a selector controller for executing an auto-selector control.

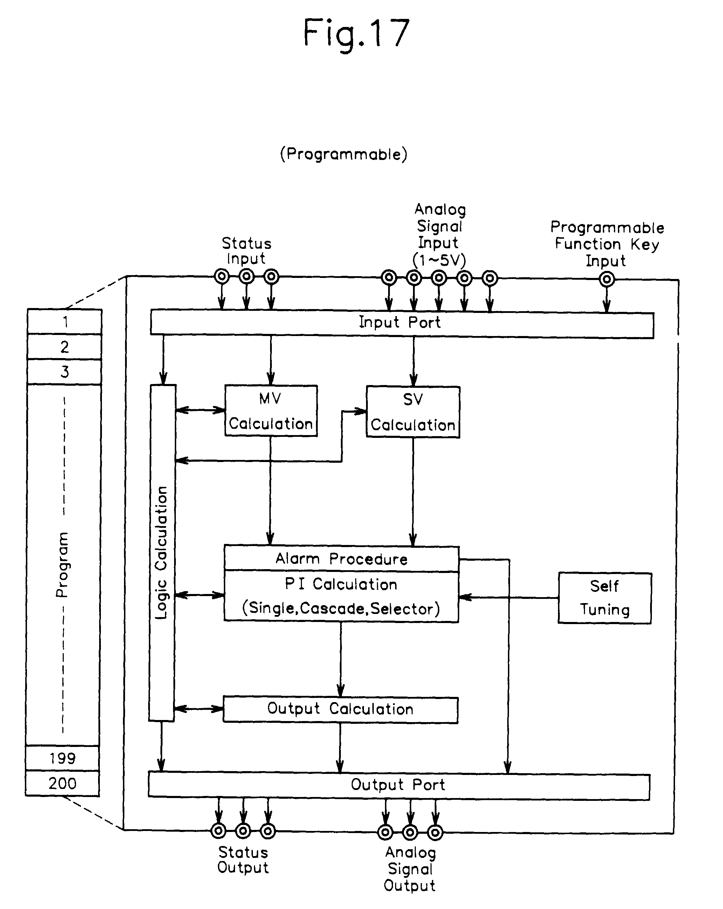

Fig. 17 is a schematic block diagram of such an arrangement that a fourth function module (programmable controller function module) is employed as indicated by another dot-ling block 3c in the controlling means 3.

This function module is so arranged that both of the control function and the calculation function are programmable, and functions as a programmable controller.

Even when these function modules are employed in the controlling means 3, if any one of these function modules is selected by the function selecting means 42, various sorts of panels are rearranged in response to the selected function, and then the panels are expanded and displayed in accordance with the signal from the panel expanding key.

It should be noted in the preferred embodiment shown in Fig. 11 that although when the present panel is expanded from the tuning panel to the engineering panel, both of the operation key KY7 and the speed increasing key KY9 are depressed at the same time, the engineering panel may be expanded at the same level when the tuning panel is expanded.

Such an apparatus of the preferred embodiment is characterized in that a plurality of function modules are provided in the controlling means, these function modules can be selected, and also the various sorts of panels displayed on the display device in accordance with the selected functions are rearranged in order to achieve the optimum panel expansion. Thus, the various sorts of functions such as the single loop controller, cascade controller, selector controller, programmable controller may be readily provided by a common hardware controller.

## Claims

1. A controller wherein a process value obtained from a process is inputted, a control calculation is carried out based upon a control parameter, and a control output is supplied to the process, said controller comprising
a container comprising
a main body (CL) consisting of an open box having four sides, a rear part, and an open front portion,
a front part (PL) fitted over said open front portion of said main body (CL) and containing, on a front face thereof, a display means (10), a plurality of key means (KY1-6, 8-10) and panel selecting key means (KY7); whereby
said display means (10) is provided for separately displaying the following panels (a) to (d):
(a) an operating panel wherein values of process and control output are shown as bar graphs,
(b) a trend graph panel wherein a trend of process values is shown,
(c) a tuning panel, and
(d) an engineering panel, using which a function of the controller is selected,
said panel selecting key means (KY7) is provided for manually instructing a display control means (9) of said display means (10) to select panels to be displayed by said display means (10), such that only one of said panels is displayed at any given time;
and whereby said plurality of key means (KY1-6, 8-10) is positioned in said front part (PL) beside and beneath said display means (10) for manually setting control operations and various parameters, and whereby said controller further comprises:
operating panel generating means (81) contained in said main body (CL) and operable by said plurality of key means (KY1-6, 8-10) assigned to such function, for generating signals to cause display of the operating panel, which shows process values and control output values presented as bar graphs (BG1, BG2), by said display means (10) ;
trend graph panel generating means (82) contained in said main body (CL) and operable by said plurality of key means (KY1-6, 8-10) assigned to such function, for generating signals to cause display of the trend graph panel, which shows transitions of the process values presented as a trend graph, by said display means (10);
tuning panel generating means (83) contained in said main body (CL) and operable by said plurality of key means (KY1-6, 8-10) assigned to such function, for generating signals to cause display of the tuning panel, which shows control parameters, by said display means (10);
engineering panel generating means (85) contained in said main body (CL) and operable by said plurality of key means (KY1-6, 8-10) assigned to such function, for generating signals to cause display of the engineering panel, which shows symbols indicative of functions assigned to each of said plurality of key means (KY1-6, 8-10),
by said display means (10), at positions corresponding to each key of said plurality of key means (KY1-6, 8-10),
wherein said display control means (9), which is contained in said main body (CL), switches between the selection of said operating panel and the selection of said trend graph panel, for display by said display means (10), upon the receipt of a signal from said panel selecting key means (KY7), and switches from the selection of said tuning panel to the selection of said engineering panel, for display by said display means (10), upon the concurrent receipt of a signal from said panel selecting key means (KY7) and a signal resulting from the operation of one of said plurality of key means (KY1-6, 8-10),
and wherein key function changing means, (11) contained in said main body (CL), change the functions of the controller assigned to said plurality of key means (KY1-6, 8-10), and change the symbols displayed in said tuning panel and said engineering panel on the basis of the changed functions of said plurality of key means (KY1-6, 8-10), and wherein
no operation key means and no display means are provided on a side surface of the controller.

2. A controller as claimed in claim 1, wherein in correspondence with said tuning panel a function of a change key (KY6) is allocated to one of said plurality of key means (KY1-6, 8-10) under such a condition that the tuning panel is displayed on the display means (10), and either said operating panel, or the trend graph panel is displayed while said change key (KY6) is being depressed.

3. A controller as claimed in claim 1, further comprising:
alarm panel generating means (84) for displaying various sorts of alarm information on said display means (10), wherein said display control means (9) displays said alarm panel when the signal from the panel selecting means (KY7) is received under such a condition that either the operating panel, or the trend graph panel is displayed.

4. A controller as claimed in claim 1, wherein said engineering panel generating means (85) is mainly used in engineering operations such as a selection of the function of the controller, a setting operation of an input range, and a setting operation of a communication function.

5. A controller as claimed in claim 1, wherein said bar graphs (BG1, BG2) displayed on the display means (10) are made in such a shape that convex-concave portions are aligned at a predetermined pitch in a direction along which the bar graph is expanded and compressed.

6. A controller as claimed in claim 1, wherein a controlling means (3) is employed which performs a predetermined control calculation by inputting a process value, and a control calculation result is outputted to a process as a control output,
comprising:
a first function module (3a) for executing a control calculation with employment of one control element;
a second function module (3b) for executing a control calculation with employment of two control elements;
function selecting means (42) for selecting any one of said function modules; and
said display control means (9) for automatically rearranging the sort of panel displayed on said display means (10) based upon the function selected by said function selecting means (42).

7. A controller as claimed in claim 6, wherein said display control means (9) selectively displays as an operating panel, a first operating panel for displaying both of the process value (PV1) and the control output value (MV) as bar graphs respectively, and also said trend graph panel for displaying the process value (PV1) as a trend graph indicative of past transition of the process value when said first function module (3a) is selected in accordance with an instruction of said plurality of key means (KY1-6, 8-10) used to instruct panel selection.

8. A controller as claimed in claim 6, wherein said display control means (9) selectively displays as an operating panel, a first operating panel for displaying one process value (PV1) and the control output value (MV) as bar graphs, respectively, a first trend graph panel indicative of past transition of said one process value (PV1), a second operating panel for displaying an other process value (PV2) and the control output value (MV) as bar graphs, respectively, and also a second trend graph panel indicative of past transition of the other process value (PV2), when said second function module (3b) is selected in accordance with an instruction of said plurality of key means (KY1-6, 8-10) for instructing panel selection.

9. A controller as claimed in claim 6, wherein panels which are automatically rearranged by the display control means (9) based upon the function selected by the function selecting means (42), correspond to an operating panel for executing a control operation of the process, tuning panels for the respective sorts of parameters set into the controlling means (3), and also an engineering panel for setting various functions executed by the controlling means (3).

10. A controller as claimed in claim 6, wherein a menu panel is provided by which selection items corresponding to the tuning panels and the engineering panel can be selected prior to the panel selection of or expansion into the tuning panels and the engineering panel.

11. A controller as claimed in claim 6, wherein said second function module (3b) functions as a cascade control executed by connecting two control elements (31, 33) in a series connection.

12. A controller as claimed in claim 6, wherein said second function module (3bl) functions as a selector controller in which an auto-selector control is executed by connecting two control elements (31, 33) in a parallel form.

13. A controller as claimed in claim 6, further comprising:
a third function module (3c) functioning as a programmable controller capable of the programming both of a control function and a of a calculation function, wherein said function selecting means (42) selects any one of said first, second and third function modules (3a, 3b, 3c).

## Patentansprüche

1. Regler, in den ein Prozeßwert, welcher aus einem Prozeß erhalten wurde, eingegeben wird, eine, auf einem Regelungsparameter basierende Regelungsberechnung durchgeführt und dem Prozess eine Regelungsausgabe zugeführt wird, wobei der Regler aufweist:
einen Behälter, der aufweist:
einen Hauptkörper (CL), bestehend aus einem offenen Kasten mit vier Seiten, einem Rückenteil und einem offenen Vorderbereich,
einen Vorderteil (PL), über dem offenen Vorderbereich des Hauptkörpers (CL) passend angebracht, und, an einer Frontseite desselben befindlich, eine Anzeigeeinrichtung (10), mehrere Tasteneinrichtungen (KY1-6, 8-10) und Anzeigefeldauswahl-Tasteneinrichtung (KY7) enthaltend; wobei
die Anzeigeeinrichtung (10) vorgesehen ist zum getrennten Anzeigen der folgenden Anzeigefelder (a) bis (d):
(a) eine Funktions- bzw. Betriebsanzeige, in der Prozeßwerte und Regelungsausgabe als Balkenanzeigen gezeigt sind,
(b) ein Tendenzdiagrammanzeigefeld, in dem eine Tendenz von Prozeßwerten gezeigt wird,
(c) ein Abgleichanzeigefeld, und
(d) ein Zustandsanzeigefeld zur Anzeige der gewählten Reglerfunktion,
die Anzeigefeldauswahl-Tasteneinrichtung (KY7) ist für manuelle Befehlseingabe in eine Anzeigesteuereinrichtung (9) der Anzeigeeinrichtung (10) vorgesehen, um von der Anzeigeeinrichtung (10) anzuzeigende Anzeigefelder auszuwählen, so daß zu jeder gegebenen Zeit lediglich ein Anzeigefeld angezeigt wird; und wobei die mehreren Tasteneinrichtungen (KY1-6, 8-10) im Vorderteil (PL) neben und unter der Anzeigeeinrichtung (10) zum manuellen Setzen von Steuerungsvorgängen und diversen Parametern, positioniert sind, und wobei der Regler weiterhin aufweist:
eine Funktionsanzeigefeld-Generierungseinrichtung (81), enthalten im Hauptkörper (CL) und bedienbar durch die mehreren Tasteneinrichtungen (KY1-6, 8-10), denen die Funktion zugewiesen ist, Signale zu erzeugen, die die Anzeige des Funktionsanzeigefeldes, das Prozeßwerte und Regelungsausgabewerte als Balkendiagramme (BG1, BG2) darstellt, durch die Anzeigeeinrichtung (10) bewirken;
eine Tendenzdiagrammanzeigefeld-Generierungseinrichtung (82), enthalten im Hauptkörper (CL) und bedienbar durch die mehreren Tasteneinrichtungen (KY1-6, 8-10), denen die Funktion zugewiesen ist, Signale zu erzeugen, die die Anzeige des Tendenzdiagrammanzeigefeldes, das Veränderungen der Prozeßwerte als Tendenzdiagramm darstellt, durch die Anzeigeeinrichtung (10) bewirken;
eine Abgleichanzeigefeld-Generierungseinrichtung (83), enthalten im Hauptkörper (CL) und bedienbar durch die mehreren Tasteneinrichtungen (KY1-6, 8-10), denen die Funktion zugewiesen ist, Signale zu erzeugen, die die Anzeige des Abgleichanzeigefeldes, das Regelungsparameter darstellt, durch die Anzeigeeinrichtung (10) bewirken;
eine Zustandsanzeigefeld-Generierungseinrichtung (85), enthalten im Hauptkörper (CL) und bedienbar durch die mehreren Tasteneinrichtungen (KY1-6, 8-10), denen die Funktion zugewiesen ist, Signale zu erzeugen, die die Anzeige des Zustandsanzeigefeldes, das jeder der mehreren Tasteneinrichtungen (KY1-6, 8-10) zugewiesene Funktionen bezeichnende Symbole darstellt, die an jeder Taste der mehreren Tasteneinrichtungen (KY1-6, 8-10) entsprechenden Positionen liegen, durch die Anzeigeeinrichtung (10) bewirken,
wobei die Anzeigesteuereinrichtung (9), die im Hauptkörper (CL) enthalten ist, aufgrund des Empfangs eines Signals von der Anzeigefeldauswahl-Tasteneinrichtung (KY7) zwischen der Auswahl des Funktionsanzeigefeldes und der Auswahl des Tendenzdiagrammanzeigefeldes zum Anzeigen in der Anzeigeeinrichtung (10) umschaltet, und aufgrund des gleichzeitigen Empfangs eines Signals von der Anzeigefeldauswahl-Tasteneinrichtung (KY7) und eines Signals, das aus der Bedienung einer der mehreren Tasteneinrichtungen (KY1-6, 8-10) resultiert, von der Auswahl des Abstimmanzeigefeldes zur Auswahl des Zustandsanzeigefeldes zum Anzeigen in der Anzeigeeinrichtung (10) umschaltet,
und wobei eine Tastenfunktionänderungseinrichtung (11), enthalten im Hauptkörper (CL), die Funktionen des Reglers, die den mehreren Tasteneinrichtungen (KY1-6, 8-10) zugeordnet sind, ändert, und die Symbole, dargestellt im Abstimmanzeigefeld und im Zustandsanzeigefeld, auf der Grundlage der geänderten Funktionen der mehreren Tasteneinrichtungen (KY1-6, 8-10) ändert, und worin keine Funktionstasteneinrichtung und keine Anzeigeeinrichtung an einer Seitenfläche des Reglers vorgesehen ist.

2. Regler gemäß Anspruch 1, worin in Übereinstimmung mit dem Abgleichanzeigefeld eine Funktion einer Änderungstaste (KY6) einer der mehreren Tasteneinrichtungen (KY1-6, 8-10) unter so einer Bedingung zugewiesen wird, daß das Abgleichanzeigefeld auf der Anzeigeeinrichtung (10) angezeigt wird, und entweder das Funktionsanzeigefeld oder das Tendenzdiagrammanzeigefeld angezeigt wird, während die Änderungstaste (KY6) gedrückt ist.

3. Regler gemäß Anspruch 1, der weiterhin aufweist: eine Alarmanzeigefeld-Generierungseinrichtung (84) zum Anzeigen diverser Arten von Alarminformation auf der Anzeigeeinrichtung (10), wobei die Anzeigesteuereinrichtung (9) das Alarmanzeigefeld anzeigt, wenn das Signal von der Anzeigefeldauswahl-Tasteneinrichtung (KY7) unter so einer Bedingung erhalten wird, daß entweder das Funktionsanzeigefeld oder das Tendenzdiagrammanzeigefeld angezeigt wird.

4. Regler gemäß Anspruch 1, worin die Zustandsanzeigefeld-Generierungseinrichtung (85) in der Hauptsache bei, den Zustand des Reglers betreffenden, Operationen, wie Wahl der Funktion des Reglers, Setzen eines Eingabebereichs und Setzen einer Kommunikationsfunktion, benutzt wird.

5. Regler gemäß Anspruch 1, worin die Balkendiagramme (BG1, BG2), angezeigt auf der Anzeigeeinrichtung (10), in so einer Form hergestellt sind, daß konvex-konkave Bereiche mit einer vorbestimmten Zeichendichte entlang einer Richtung, in der sich das Balkendiagramm ausdehnt und zusammenzieht, ausgerichtet sind.

6. Regler gemäß Anspruch 1, worin eine Regelungseinrichtung (3) eingesetzt ist, die eine vorbestimmte Regelungsberechnung durch Eingeben eines Prozeßwertes durchführt, und ein Regelungsberechnungsergebnis an einen Prozeß als Regelungsausgabe ausgegeben wird, der aufweist:
ein erstes Funktionsmodul (3a) zum Ausführen einer Regelungsberechnung unter Einsatz eines Regelungselements;
ein zweites Funktionsmodul (3b) zum Ausführen einer Regelungsberechnung unter Einsatz zweier Regelungselemente;
eine Funktionsauswahleinrichtung (42) zum Auswählen irgendeines der Funktionsmodule;
die Anzeigesteuereinrichtung (9), zum automatischen Wiederherstellen derjenigen Art von auf der Anzeigeeinrichtung (10) angezeigtem Anzeigefeld, die auf der Funktion beruht, die von der Funktionsauswahleinrichtung (42) ausgewählt wurde.

7. Regler gemäß Anspruch 6, worin die Anzeigesteuereinrichtung (9) wahlweise ein erstes Funktionsanzeigefeld zum Anzeigen jeweils des Prozeßwertes (PV1) und des Regelungsausgabewertes (MV) als Balkendiagramm, und ebenso das Tendenzdiagrammanzeigefeld zum Anzeigen des Prozeßwertes (PV1) als Tendenzdiagramm, das eine vorangegangene Änderung des Prozeßwertes anzeigt, wenn das erste Funktionsmodul (3a) in Übereinstimmung mit einem Befehl der mehreren Tasteneinrichtungen (KY1-6, 8-10), die zur Anweisung der Anzeigefeldauswahl dienen, gewählt wurde, als ein Funktionsanzeigefeld anzeigt.

8. Regler gemäß Anspruch 6, worin die Anzeigesteuereinrichtung (9) wahlweise ein erstes Funktionsanzeigefeld zum Anzeigen jeweils eines Prozeßwertes (PV1) und des Regelungsausgabewertes (MV) als Balkendiagramm, ein erstes Tendenzdiagrammanzeigefeld, das eine vorangegangene Änderung des einen Prozeßwertes (PV1) anzeigt, ein zweites Funktionsanzeigefeld zum Anzeigen jeweils eines weiteren Prozeßwertes (PV2) und des Regelungsausgabewertes (MV) als Balkendiagrammm, und ein zweites Tendenzdiagrammanzeigefeld, das eine vorangegange Änderung des anderen Prozeßwertes (PV2) anzeigt, wenn das zweite Funktionsmodul (3b) in Übereinstimmung mit einem Befehl der mehreren Tasteneinrichtungen (KY1-6, 8-10) zur Anweisung der Anzeigefeldauswahl gewählt wurde, als ein Funktionsanzeigefeld anzeigt.

9. Regler gemäß Anspruch 6, worin Anzeigefelder, die automatisch von der Anzeigesteuereinrichtung (9), beruhend auf der Funktion, die von der Funktionsauswahleinrichtung (42) ausgewählt wurde, wiederhergestellt werden, einem Funktionsanzeigefeld zum Ausführen eines Regelungsvorgangs des Prozesses entsprechen, Abgleichanzeigefeldern für die jeweiligen Arten von Parametern, die in die Regelungseinrichtung (3) geschrieben wurden, entsprechen, und ebenso einem Zustandsanzeigefeld zum Setzen diverser Funktionen, die von der Regelungseinrichtung (3) ausgeführt werden, entsprechen.

10. Regler gemäß Anspruch 6, worin ein Menüanzeigefeld bereitgestellt wird, in dem Auswahlpunkte entsprechend den Abgleichanzeigefeldern und dem Zustandsanzeigefeld vor der Auswahl der Anzeigefelder der oder einer Ausdehnung in die Abgleichanzeigefelder und das Zustandsanzeigefeld ausgewählt werden können.

11. Regler gemäß Anspruch 6, worin das zweite Funktionsmodul (3b) als Kaskadenregelung arbeitet, die durch Verbinden zweier Steuerelemente (31, 33) in einer Serienverbindung ausgeführt wird.

12. Regler gemäß Anspruch 6, worin das zweite Funktionsmodul (3b1) als Auswahlregler arbeitet, in welchem eine automatische Auswahlüberwachung ausgeführt wird, indem zwei Steuerelemente (31, 33) auf parallele Weise verbunden werden.

13. Regler gemäß Anspruch 6, der weiterhin aufweist: ein drittes Funktionsmodul (3c), als programmierbarer Regler arbeitend, mit der Fähigkeit sowohl einer Steuerfunktions- als auch einer Rechenvorgangsprogrammierung, wobei die Funktionsauswahleinrichtung (42) ein Modul aus der Gruppe, bestehend aus dem ersten, dem zweiten und dem dritten Funktionsmodul (3a, 3b, 3c), auswählt.

## Revendications

1. Dispositif de commande dans lequel une valeur de traitement obtenue à partir d'un traitement est introduite, un calcul de commande est réalisé sur la base d'un paramètre de commande, et une sortie de commande est fournie au traitement, ledit dispositif de commande comprenant :
un conteneur comprenant :
un corps principal (CL) se composant d'une boîte ouverte ayant quatre côtés, une partie arrière, et une partie avant ouverte,
une partie avant (PL) adaptée sur ladite partie avant ouverte dudit corps principal (CL) et contenant, sur une face avant de celui-ci, un moyen d'affichage (10), une pluralité de moyens de touche (KY1 à 6, 8 à 10) et un moyen de touche de sélection de panneau (KY7), de sorte que
ledit moyen d'affichage (10) est fourni pour afficher séparément les panneaux suivants (a) à (d) :
(a) un panneau de fonctionnement dans lequel des valeurs de traitement et une sortie de commande sont montrées comme des graphiques en bâton,
(b) un panneau de graphique de tendance dans lequel une tendance des valeurs de traitement est montrée,
(c) un panneau d'accord, et
(d) un panneau technique, utilisant une fonction du dispositif de commande qui est sélectionnée,
ledit moyen de touche de sélection de panneau (KY7) est fourni pour donner l'instruction manuellement à un moyen de commande d'affichage (9) dudit moyen d'affichage (10) pour sélectionner des panneaux à afficher par ledit moyen d'affichage (10), pour que seulement un desdits panneaux soit affiché à un instant donné quelconque ;
et où ladite pluralité de moyens de touche (KY1 à 6, 8 à 10) est positionnée dans ladite partie avant (PL) à côté et sous ledit moyen d'affichage (10) pour régler manuellement des opérations de commande et divers paramètres, et où ledit moyen de commande comprend en outre :
un moyen de génération de panneau de fonctionnement (81) contenu dans ledit corps principal (CL) et utilisable par ladite pluralité de moyens de touche (KY1 à 6, 8 à 10) assignés à cette fonction, pour générer des signaux pour provoquer l'affichage du panneau de fonctionnement, qui montre des valeurs de traitement et des valeurs de sortie de commande présentées comme des graphiques en bâton (BG1, BG2), par ledit moyen d'affichage (10);
un moyen de génération de panneau graphique de tendance (82) contenu dans ledit corps principal (CL) et utilisable par ladite pluralité de moyens de touche (KY1 à 6, 8 à 10) assignés à une telle fonction, pour générer des signaux pour provoquer l'affichage du panneau graphique de tendance, qui montre des transitions des valeurs de traitement présentées comme un graphique de tendance, par ledit moyen d'affichage (10) ;
un moyen de génération de panneau d'accord (83) contenu dans ledit corps principal (CL) et utilisable par ladite pluralité de moyens de touche (KY1 à 6, 8 à 10) assignés à cette fonction, pour générer des signaux pour provoquer l'affichage du panneau d'accord, qui montre des paramètres de commande, par ledit moyen d'affichage (10) ;
un moyen de génération de panneau technique (85) contenu dans ledit corps principal (CL) et utilisable par ladite pluralité de moyens de touche (KY1 à 6, 8 à 10) assignés à cette fonction, pour générer des signaux pour provoquer l'affichage du panneau technique, qui montre des symboles indicateurs des fonctions assignées à chacune de ladite pluralité de moyens de touche (KY1 à 6, 8 à 10), par ledit moyen d'affichage (10), à des positions correspondant à chaque touche de ladite pluralité de moyens de touche (KY1 à 6, 8 à 10)
où ledit moyen de commande d'affichage (9), qui est contenu dans ledit corps principal (CL), commute entre la sélection dudit panneau de fonctionnement et la sélection dudit panneau graphique de tendance, pour afficher par ledit moyen d'affichage (10), lors de la réception d'un signal dudit moyen de touche de sélection de panneau (KY7), et commute à partir de la sélection dudit panneau d'accord à la sélection dudit panneau technique, pour afficher par ledit moyen d'affichage (10), lors de la réception concurrente d'un signal dudit moyen de touche de sélection de panneau (KY7) et un signal résultant du fonctionnement d'un de ladite pluralité de moyens de touche (KY1 à 6, 8 à 10),
et où un moyen de changement de fonction de touche, (11), contenu dans ledit corps principal (CL), change les fonctions du dispositif de commande assigné à ladite pluralité de moyens de touche (KY1 à 6, 8 à 10), et change les symboles affichés dans ledit panneau d'accord et ledit panneau technique sur la base des fonctions changées de ladite pluralité de moyens de touche (KY1 à 6, 8 à 10), et où
aucun moyen de touche de fonctionnement et aucun moyen d'affichage sont fournis sur une surface latérale du dispositif de commande.

2. Dispositif de commande selon la revendication 1, dans lequel en correspondance avec ledit panneau d'accord, une fonction d'une touche de changement (KY6) est allouée à une de ladite pluralité de moyens de touche (KY1 à 6, 8 à 10) dans une condition telle que le panneau d'accord est affiché sur le moyen d'affichage (10), et soit ledit panneau de fonctionnement soit le panneau graphique de tendance est affiché alors que ladite touche de changement (KY6) est appuyée.

3. Dispositif de commande selon la revendication 1, comprenant en outre :
un moyen de génération de panneau d'alarme (84) pour afficher diverses sortes d'informations d'alarme sur ledit moyen d'affichage (10), où ledit moyen de commande d'affichage (9) affiche ledit panneau d'alarme lorsque le signal du moyen de sélection de panneau (KY7) est reçu dans une condition telle que soit le panneau de fonctionnement, soit le panneau de graphique de tendance est affiché.

4. Dispositif de commande selon la revendication 1, dans laquelle ledit moyen de génération de panneau technique (85) est principalement utilisé dans des opérations techniques telles qu'une sélection de la fonction du dispositif de commande, une opération de réglage d'un intervalle d'entrée, et une opération de réglage d'une fonction de communication.

5. Dispositif de commande selon la revendication 1, dans lequel lesdits graphiques en bâton (BG1, BG2) affichés sur le moyen d'affichage (10) sont faits dans une forme telle que des parties convexes - concaves sont alignées à un pas prédéterminé dans une direction le long de laquelle le graphique en bâton est décompressé et compressé.

6. Dispositif de commande selon la revendication 1, dans lequel un moyen de commande (3) est utilisé qui réalise un calcul de commande prédéterminé en introduisant une valeur de traitement, et un résultat de calcul de commande est fourni à un traitement tel qu'une sortie de commande comprenant :
un premier module de fonction (3a) pour exécuter un calcul de commande avec l'utilisation d'un élément de commande ;
un second module de fonction (3b) pour exécuter un calcul de commande avec l'utilisation de deux éléments de commande ;
un moyen de sélection de fonction (42) pour sélectionner un quelconque desdits modules de fonction ; et
ledit moyen de commande d'affichage (9) pour rearranger automatiquement le genre de panneau affiché sur lesdits moyens d'affichage (10) sur la base de la fonction sélectionnée par ledit moyen de sélection de fonction (42).

7. Dispositif de commande selon la revendication 6, dans lequel ledit moyen de commande d'affichage (9) affiche sélectivement comme un panneau de fonctionnement, un premier panneau de fonctionnement pour afficher à la fois la valeur de traitement (PV1) et la valeur de sortie de commande (MV) comme des graphiques en bâton respectivement, et aussi ledit panneau de graphique de tendance pour afficher la valeur de traitement (PV1) comme un graphique de tendance indicateur de transition passée de la valeur de traitement lorsque ledit premier module de fonctionnement (3a) est sélectionné selon une instruction de ladite pluralité de moyens de touche (KY1 à 6, 8 à 10) utilisés pour donner l'instruction de sélection de panneau.

8. Dispositif de commande selon la revendication 6, dans lequel ledit moyen de commande d'affichage (9) affiche sélectivement comme un panneau de fonctionnement, un premier panneau de fonctionnement pour afficher une valeur de traitement (PV1) et une valeur de sortie de commande (MV) comme des graphiques en bâton, respectivement, un premier panneau de graphique de tendance indicateur de la transition passée de ladite valeur de traitement (PV1), un second panneau de fonctionnement pour afficher une autre valeur de traitement (PV2) et la valeur de sortie de commande (MV) comme des graphiques en bâton, respectivement, et aussi un second panneau graphique de tendance indicateur de la transition passée de l'autre valeur de traitement (PV2), lorsque ledit second module de fonction (3b) est sélectionné selon une instruction de ladite pluralité de moyens de touche (KY1 à 6, 8 à 10) pour donner l'instruction de sélection de panneau.

9. Dispositif de commande selon la revendication 6, dans lequel des panneaux qui sont automatiquement re-arrangés par le moyen de commande d'affichage (9) sur la base de la fonction sélectionnée par le moyen de sélection de fonction (42), correspondent à un panneau de fonctionnement pour exécuter une opération de commande de traitement, des panneaux d'accord pour les sortes respectives de paramètres mis dans le moyen de commande (3), et aussi un panneau technique pour régler diverses fonctions exécutées par le moyen de commande (3).

10. Dispositif de commande selon la revendication 6, dans lequel un panneau de menu est fourni par lequel des éléments de sélection correspondant aux panneaux d'accord et au panneau technique peuvent être sélectionnés avant la sélection de panneau ou décompressés dans les panneaux d'accord et le panneau technique.

11. Dispositif de commande selon la revendication 6, dans lequel ledit second module de fonction (3b) fonctionne comme une commande en cascade exécutée en raccordant deux éléments de commande (31, 33) dans une liaison en série.

12. Dispositif de commande selon la revendication 6, dans lequel ledit second module de fonction (3b1) fonctionne comme un dispositif de commande sélecteur dans lequel une commande d'auto-sélecteur est exécutée en raccordant deux éléments de commande (31, 33) sous forme parallèle.

13. Dispositif de commande selon la revendication 6, comprenant en outre :
un troisième module de fonction (3c) fonctionnant comme un dispositif de commande programmable capable de programmer à la fois une fonction de commande et une fonction de calcul, où ledit moyen de sélection de fonction (42) sélectionne un quelconque dudit premier, second et troisième modules de fonction (3a, 3b, 3c).
